(19) Europäisches Patentamt
European Patent Office
Office européen des brevets

(11) **EP 2 619 899 B1**

(12) **EUROPÄISCHE PATENTSCHRIFT**

(45) Veröffentlichungstag und Bekanntmachung des Hinweises auf die Patenterteilung:
**10.12.2014 Patentblatt 2014/50**

(51) Int Cl.:
*H02P 6/16* *(2006.01)*       *H02P 6/18* *(2006.01)*
*H02P 23/12* *(2006.01)*       *H02P 23/14* *(2006.01)*

(21) Anmeldenummer: **11760440.5**

(22) Anmeldetag: **09.09.2011**

(86) Internationale Anmeldenummer:
**PCT/EP2011/065643**

(87) Internationale Veröffentlichungsnummer:
**WO 2012/038274 (29.03.2012 Gazette 2012/13)**

(54) **VERFAHREN UND VORRICHTUNG ZUR SENSORLOSEN ERMITTLUNG EINER LÄUFERLAGE EINER ELEKTRISCHEN MASCHINE**

METHOD AND DEVICE FOR THE SENSORLESS DETERMINATION OF A ROTOR POSITION OF AN ELECTRIC MOTOR

PROCÉDÉ ET DISPOSITIF DE DÉTERMINATION, SANS L'AIDE DE CAPTEUR, D'UNE POSITION D'UN ROTOR D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2010 DE 102010041021**

(43) Veröffentlichungstag der Anmeldung:
**31.07.2013 Patentblatt 2013/31**

(73) Patentinhaber: **Robert Bosch GmbH**
**70442 Stuttgart (DE)**

(72) Erfinder:
• **FRICKER, David**
**F-67240 Oberhoffen Sur Moder (FR)**
• **REISS, Alexander**
**F-67160 Salmbach (FR)**

(56) Entgegenhaltungen:
**EP-A2- 1 133 050       JP-A- 2010 068 581**
**US-A1- 2004 201 358**

EP 2 619 899 B1

**Beschreibung**

Technisches Gebiet

Die vorliegende Erfindung betrifft elektronisch kommutierte elektrische Maschinen, bei denen eine Läuferlage eines Läufers sensorlos mithilfe einer Bestimmung einer induzierten Spannung bestimmt wird. Insbesondere betrifft die vorliegende Erfindung Verfahren zur sensorlosen Bestimmung der Läuferlage.

Stand der Technik

Zur elektronischen Kommutierung von elektrischen Maschinen ist es notwendig, die Läuferlage des Läufers (bei rotatorischen Maschinen des Rotors) zu bestimmen, um daraus die momentane Richtung und Stärke des anzulegenden Drehfelds bzw. des Feldzeigers, zu ermitteln. Neben zahlreichen Verfahren zur sensorbasierten Erfassung der Läuferlage sind zunehmend Verfahren im Einsatz, bei denen die Läuferlage anhand elektrischer Größen, wie beispielsweise anhand von Spannungen und Strömen, bestimmt wird.

Eines dieser Verfahren wird Back-EMF-Verfahren genannt, bei dem aus der induzierten Spannung in einer der Phasen der elektrischen Maschine die Läuferlage ermittelt wird. Dabei wird eine bestimmte Läuferlage einer Position des Nulldurchgangs der induzierten Spannung zugeordnet. Da es zur Messung der induzierten Spannung notwendig ist, den entsprechenden Phasenanschluss, an dem die induzierte Spannung gemessen werden soll, stromlos zu schalten, ist man für die Verwendung des Back-EMF-Verfahrens in der Wahl des geeigneten Bestromungsmusters für die elektronische Kommutierung eingeschränkt. Weiterhin ist eine Läuferlagebestimmung mithilfe des Back-EMF-Verfahrens in der Regel nur bei solchen elektrischen Maschinen exakt möglich, bei denen die induzierte Spannung einen annähernd sinusförmigen Verlauf beschreibt und die Phasenspannungen nicht über einen Wechselrichter gestellt werden, da bei Wechselrichtern ein Phasenanschluss nicht stromlos geschaltet werden kann.

Zur Messung der induzieren Spannung sind daher Austastlücken in Form von Unterbrechungen des Bestromungsmusters gemäß einer vorgegebenen Pulsweitenmodulation vorgesehen. Während der Austastlücken wird eine betreffende Phase, in der ein Nulldurchgang der induzierten Spannung erwartet wird, stromlos geschaltet und eine Messung der Höhe der induzierten Spannung bzw. deren Gradienten durchgeführt, um den Zeitpunkt des Nulldurchgangs der induzierten Spannung während der Austastlücke zu bestimmen.

Das Vorsehen von Austastlücken ist jedoch mit einer erhöhten Geräuschentwicklung beim Betrieb der elektrischen Maschine verbunden. Eine für beispielsweise das Geräuschverhalten vorteilhafte dauerhafte Spannungsvorgabe (ohne Austastlücke) ist mit einem Back-EMF-Verfahren in der Regel nicht möglich. Die Güte bekannter Verfahren zum sensorlosen Betrieb von sinusförmigen Maschinen, wie beispielsweise bei einer sensorlosen feldorientierten Regelung, nimmt ab, je mehr der Verlauf der induzierten Spannung von einem rein sinusförmigen Verlauf abweicht.

Die Druckschrift JP2010068581 offenbart ein Verfahren zum Schätzen einer an einen Elektromotor angelegten Spannung, zum Schätzen einer induzierten Spannung mit Hilfe der geschätzten Spannung und zum Schätzen einer Läuferlage und einer Geschwindigkeit des Elektromotors daraus.

Die Druckschrift US2004/0201358 offenbart ein Steuergerät für einen synchronen Reluktanzmotor mit einer Schätzeinheit zum Schätzen einer Läuferlage und Geschwindigkeit des Motors aus den Phasenspannungen.

Aus der Druckschrift EP 1 133 050 A2 ist ein Verfahren zum Schätzen einer Läuferlage eines Synchronmotors mithilfe einer Bestimmung einer induzierten Spannung bekannt.

Es ist daher Aufgabe der vorliegenden Erfindung, ein Verfahren und eine Vorrichtung zur Verfügung zu stellen, mit denen die Läuferlage sensorlos auch bei nicht sinusförmigen Spannungen ermittelt werden kann.

Offenbarung der Erfindung

Diese Aufgabe wird durch das Verfahren zur sensorlosen Ermittlung einer Läuferlage gemäß Anspruch 1 sowie durch die Vorrichtung und das Motorsystem gemäß den nebengeordneten Ansprüchen gelöst

Weitere vorteilhafte Ausgestaltungen sind in den abhängigen Ansprüchen angegeben.

Gemäß einem ersten Aspekt ist ein Verfahren zum sensorlosen Bestimmen einer Läuferlage zum Betreiben einer elektronisch kommutierten elektrischen Maschine, mit folgenden Schritten:

- Bestimmen einer induzierten Spannung in Spulen der elektrischen Maschine aus einem oder mehreren Maschinenströmen und Maschinenspannungen; und
- Schätzen der Läuferlage und / oder einer Geschwindigkeitsangabe aus einer Abweichung der induzierten Spannung von einer geschätzten induzierten Spannung.

Eine Idee des obigen Verfahrens besteht darin, die Läuferlageschätzfehler indirekt über die Schätzfehler der induzierten Spannungen zu erfassen. Dabei können deren Verläufe nicht sinusförmig sein, wie sie insbesondere bei Motoren geringer Baugröße vorkommen.

Die Korrektur und optional die Filterung werden mithilfe eines nichtlinearen Schätzers durchgeführt, der die induzierte Spannung anhand einer Streckennachbildung schätzt. Anhand einer Abweichung zwischen der geschätzten induzierten Spannung und der gemessenen induzierten Spannung wird mithilfe einer Linearisierung der Fehler der Läuferlage und der Winkelgeschwindigkeit berechnet. Diese werden anschließend in die Streckennachbildung des Schätzers zurückgeführt, um die geschätzte Läuferlage und die geschätzte Winkelgeschwindigkeit zu korrigieren. Auf diese Weise ist es möglich, eine Läuferlage und Winkelgeschwindigkeit sensorlos auch bei elektrischen Maschinen zu erhalten, die einen nicht sinusförmigen Verlauf der induzierten Spannung hervorrufen.

Weiterhin ist vorgesehen, dass das Ermitteln der Läuferlage und der Geschwindigkeitsangabe durchgeführt wird,

- indem die Abweichung der induzierten Spannung linearisiert wird, um eine Abweichung zwischen der aktuellen Läuferlage und der geschätzten Läuferlage und / oder eine Abweichung zwischen der aktuellen Geschwindigkeitsangabe und der geschätzten Geschwindigkeitsangabe zu erhalten,
- indem die Abweichungen der Läuferlage und / oder der Geschwindigkeitsangabe einer virtuellen Strecke zugeführt wird, um die geschätzte Läuferlage und die geschätzte Geschwindigkeitsangabe zu ermitteln; und
- indem die geschätzte Läuferlage und die geschätzte Geschwindigkeitsangabe in eine geschätzte induzierte Spannung zurückgerechnet werden.

Es kann vorgesehen sein, dass die Abweichungen der Läuferlage und der Geschwindigkeitsangabe verwendet werden, um die geschätzte Läuferlage und die geschätzte Geschwindigkeitsangabe zu korrigieren.

Weiterhin kann eine durch eine Abtastung oder Filterung der induzierten Spannung bewirkte Verzerrung durch eine mittels der Übertragungsfunktion adaptierte Linearisierung korrigiert werden, um eine Abweichung zwischen der aktuellen Läuferlage und der geschätzten Läuferlage und / oder eine Abweichung zwischen der aktuellen Geschwindigkeitsangabe und der geschätzten Geschwindigkeitsangabe zu erhalten, wobei die zurückgerechnete geschätzte induzierte Spannung mit der gleichen Übertragungsfunktion beaufschlagt wird.

Gemäß einem weiteren Aspekt ist eine Vorrichtung zum sensorlosen Bestimmen einer Läuferlage zum Betreiben einer elektronisch kommutierten elektrischen Maschine vorgesehen, umfassend:

- einen Berechnungsblock zum Bestimmen einer induzierten Spannung in Spulen der elektrischen Maschine aus einem oder mehreren Maschinenströmen und Maschinenspannungen;
- einen Schätzer zum Schätzen der Läuferlage und / oder einer Geschwindigkeitsangabe aus einer Abweichung der induzierten Spannung von einer geschätzten induzierten Spannung.

Weiterhin kann die Vorrichtung umfassen:

- einen Linearisierungsblock zum Linearisieren der Abweichung der induzierten Spannung, um eine Abweichung zwischen der aktuellen Läuferlage und der geschätzten Läuferlage und / oder eine Abweichung zwischen der aktuellen Geschwindigkeitsangabe und der geschätzten Geschwindigkeitsangabe zu erhalten,
- einen Rückrechnungsblock zum Rückrechnen der geschätzten Läuferlage und der geschätzten Geschwindigkeitsangabe in eine geschätzte induzierte Spannung.

Gemäß einem weiteren Aspekt ist ein Motorsystem mit einer elektrischen Maschine und der obigen Vorrichtung vorgesehen.

Gemäß einem weiteren Aspekt ist ein Computerprogrammprodukt vorgesehen, das einen Programmcode enthält, der, wenn er auf einer Datenverarbeitungseinheit ausgeführt wird, das obige Verfahren durchführt.

Kurzbeschreibung der Zeichnungen

Bevorzugte Ausführungsformen der vorliegenden Erfindung werden nachfolgend anhand der beigefügten Zeichnungen näher erläutert. Es zeigen:

Figur 1   eine Blockdarstellung eines Motorsystems mit einer elektronisch kommutierten elektrischen Maschine zum sensorlosen Betrieb; und

Figur 2   eine Funktionsblockdarstellung zur Bestimmung der tatsächlichen Läuferlage aus der induzierten Spannung.

Beschreibung von Ausführungsformen

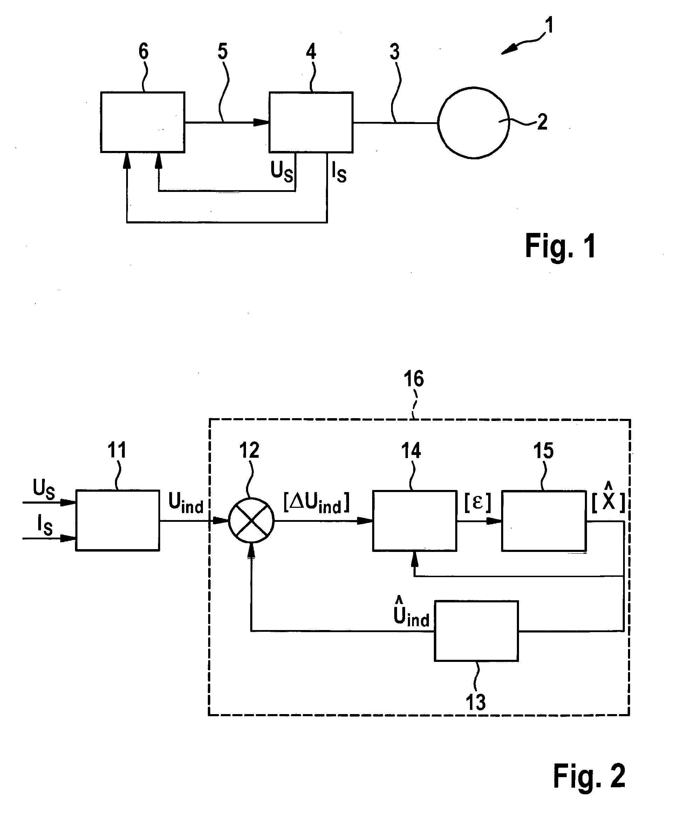

Figur 1 zeigt ein Motorsystem 1 zum Betreiben einer elektrischen Maschine 2. Die elektrische Maschine 2 ist vorzugsweise als bürstenlose, d. h. elektronisch kommutierte, elektrische Maschine, wie beispielsweise in Form einer Synchronmaschine, einer Asynchronmaschine, einer Reluktanzmaschine oder dergleichen, ausgeführt. Die elektrische Maschine 2 ist mehrphasig ausgebildet und es werden über Phasenleitungen 3 Phasenspannungen an die elektrische Maschine 2 zum Betreiben angelegt. Die Phasenspannungen werden in einer Treiberschaltung 4 erzeugt. Im Fall, dass die elektrische Maschine 2 als ein Generator ausgebildet ist, werden über die Phasenleitungen 3 elektrischen Spannungen und Ströme von der Treiberschaltung 4, die in diesem Fall als Wandlerschaltung betrieben wird, empfangen.

Im Folgenden wird von einem Antriebsmotor als elektrische Maschine 2 ausgegangen.

Die Treiberschaltung 4 legt zum Betreiben der elektrischen Maschine 2 zeitlich aufeinander folgend Phasenpotentiale an die Phasenleitungen 3 an, abhängig von Steuersignalen, die der Treiberschaltung 4 über Steuerleitungen 5 bereitgestellt werden. Dazu ist mit der Treiberschaltung 4 eine Versorgungsquelle (nicht gezeigt) verbunden, die die elektrische Energie zum Betreiben des Motors 2 bereitstellt.

Die Steuersignale werden in einer Steuereinheit 6 abhängig von einer Läuferlage eines Läufers der elektrischen Maschine 2 und optional abhängig von einer Läufergeschwindigkeit bzw. Drehzahl des Läufers generiert. Die Steuereinheit 6 kann beispielsweise als Mikrocontroller ausgebildet sein.

Im vorliegenden Fall soll das Motorsystem 1 sensorlos ausgebildet sein und es werden die Läuferlage bzw. die Drehzahl aus Phasenspannungen und Phasenströmen abgeleitet. Ein gängiges Verfahren hierfür ist die Bestimmung der induzierten Spannung mithilfe des so genannten Back-EMF-Verfahrens. Beim Back-EMF-Verfahren wird der Verlauf der induzierten Spannung $U_{ind}$ in den Phasensträngen des Motors 2, d.h. in den Phasenleitungen 3, ermittelt und die Zeitpunkte der Nulldurchgänge der induzierten Spannung $U_{ind}$ einer festen Läuferposition zugeordnet.

Die Phasenströme $I_s$ und optional die Phasenspannungen $U_s$ können in der Treiberschaltung 4 gemessen und der Steuereinheit 6 zugeführt werden. Gemäß nachstehender Motordifferentialgleichung kann die induzierte Spannung $U_{ind}$ ermittelt werden.

$$\vec{U}_{ind} = \vec{U}_s - R \cdot \vec{I}_s - [L]\frac{\overline{d\vec{i}_s}}{dt}$$

wobei R dem Wicklungswiderstand und L der Induktivität entspricht.

Alternativ können die Maschinenspannungen anhand der vorgegebene Steuersignale nachgerechnet werden. Eine Messung kann jedoch aus verschiedenen Gründen erforderlich sein:

- bei ausgeschalteter Endstufe und mechanischer Bewegung des Antriebs muss die Läuferlage bekannt sein
- Die Genauigkeit der gestellten Phasenspannung muss erhöht werden, um die Antriebsgüte zu verbessern
- Die Verwendung der Dioden-Kennlinie anstatt der einer gesteuerten Schalter (MOSFET, IGBT...) kann in manche Betriebszustände gewünscht sein und impliziert eine Messung.

Bei der Messung der Maschinenspannungen müssten in der Regel wegen der getakteten Klemmenspannungen die erfasste Signale stark gefiltert werden. Die Signale der Maschinenströme werden aufbereitet, so dass sie gleiche Übertragungsfunktion erfahren. Folglich erhält man weiterhin die gleiche Verzerrung bei den berechneten induzierten Spannungen und daher auch einen Fehler der Läuferlage. Die notwendige Filterung kann in dem vorgeschlagenen Aufbau zurückgenommen werden, da der Läuferlageschätzer auch eine Filterwirkung aufweist. Ein stärkeres Rauschen des Fehlersignals kann hier in Kauf genommen werden.

Die induzierte Spannung $U_{ind}$ wird als Raumzeiger ermittelt und der Verlauf der induzierten Spannung $U_{ind}$ hängt im Wesentlichen von Motorgeometrien ab und ist insbesondere bei Elektromotoren mit kleinen Abmessungen häufig nicht sinusförmig.

Die Lage- und Drehzahlermittlung wird durch einen nichtlinearen Schätzer 16 durchgeführt. Die Funktion des nichtlinearen Schätzers 16 ist durch das Funktionsblockdiagramm der Figur 2 dargestellt. Die Funktionen des nichtlinearen Schätzers 16 werden vorzugsweise vollständig in der Steuereinheit 6 ausgeführt. Die Steuereinheit 6 empfängt, wie zuvor beschrieben, Angaben zu den Phasenspannungen und den Phasenströmen $U_s$, $I_s$ und berechnet daraus die momentane induzierte Spannung $U_{ind}$ gemäß der obigen Motordifferentialgleichung.

Diese Berechnung erfolgt in einem Berechnungsblock 11. Die in dem Berechnungsblock 11 berechnete induzierte Spannung $U_{ind}$ wird einem Differenzglied 12 zugeführt, dem auch eine geschätzte induzierte Spannung $\hat{U}_{ind}$ zugeführt wird. Es ergibt sich eine Spannungsdifferenz $\Delta U_{ind}$ zwischen der gemäß obiger Formel (oder in sonstiger Weise) berechneten $U_{ind}$ und der geschätzten induzierten Spannung $\hat{U}_{ind}$. Schätzwerte werden im Folgenden durch ein Dachsymbol über der betreffenden Größe angezeigt.

Die geschätzte induzierte Spannung $\hat{U}_{ind}$ ergibt sich aus einer Berechnung in einem Rückrechnungsblock 13 gemäß:

$$\begin{bmatrix} U_{ind_\alpha} \\ U_{ind_\beta} \end{bmatrix} = \begin{bmatrix} K_{E\alpha}(\varphi_{el}) \\ K_{E\beta}(\varphi_{el}) \end{bmatrix} \cdot \omega_{el} = [F](\varphi_{el}, \omega_{el}) = [F]([X])$$

$$[\hat{U}_{ind}] = [F]([\hat{X}])$$

Mit

$$[X] = \begin{bmatrix} \varphi_{el} \\ \omega_{el} \end{bmatrix} \quad \text{und} \quad [\hat{X}] = \begin{bmatrix} \hat{\varphi}_{el} \\ \hat{\omega}_{el} \end{bmatrix}$$

wobei $\omega_{el}$ einer Angabe zur Drehzahl als Geschwindigkeitsangabe entspricht.

Bei der Verwendung eines Filters zur Signalaufbereitung der Phasenspannung bzw. Phasenströme, wird die berechnete induzierte Spannung $U_{ind}$ mit einer Übertragungsfunktion T(s) gefiltert. Zum Ausgleich kann auch die geschätzte induzierte Spannung $\hat{U}_{ind}$ mit gleicher Übertragungsfunktion T(s) gefiltert werden.

Die Spannungsdifferenz $\Delta U_{ind}$ zwischen der berechneten $U_{ind}$ und der geschätzten induzierten Spannung $\hat{U}_{ind}$ als Berechnungsfehler für die berechnete induzierte Spannung wird mittels Linearisierung in einem Linearisierungsblock 14 der Fehler der Läuferlage $\Delta\varphi_{el}$ und/oder der Winkelgeschwindigkeit/Drehzahl $\Delta\omega_{el}$ berechnet. Die Berechnung der Abweichung $[\varepsilon]$ erfolgt entsprechend:

$$[\varepsilon] = [X] - [\hat{X}] = \begin{bmatrix} \varphi_{el} - \hat{\varphi}_{el} \\ \omega_{el} - \hat{\omega}_{el} \end{bmatrix}$$

$$[\Delta U_{ind}] = [U_{ind}] - [\hat{U}_{ind}]$$

$$[J] = \frac{\partial [F]}{\partial [X]}$$

wenn $[\varepsilon] = [X] - [\hat{X}]$ relativ klein, gilt:

$$[U_{ind}] - [\hat{U}_{ind}] \approx \frac{\partial [F]}{\partial [X]}([\hat{X}]) \cdot [\varepsilon]$$

$$[\Delta U_{ind}] \approx [J]([\hat{X}]) \cdot [\varepsilon]$$

Bei der Verwendung eines Filters zur Signalaufbereitung der Phasenspannung bzw. Phasenströme, kann vorgesehen sein, dass die Linearisierung die Übertragungsfunktion T(s) berücksichtigt wird. Anstelle der Funktion F wird die Funktion $F_2$ angesetzt.

$$F_2 (\varphi_{el}, \omega_{el}) = [T(s) \cdot K_{E\alpha}(\varphi_{el}) ; T(s) \cdot K_{E\beta}(\varphi_{el})] \cdot \omega_{el}$$

Um die Funktion $F_2$ zu erhalten, werden die bei einer konstante Drehzahl durch die Filterung der Motorkonstanten $K_{E\alpha}$ und $K_{E\beta}$ hervorgerufene Formfehler Winkelgeschwindigkeitsabhängig einbezogen,

Der Linearisierungsblock 14 dient der Umrechnung des Fehlers der induzierten Spannung $U_{ind}$ in den Fehler $[\varepsilon]$ der Zustandsgrößen $\varphi_{el}$, $\omega_{el}$. Der Zusammenhang zwischen dem Fehler der Zustandsgrößen $\varphi_{el}$, $\omega_{el}$ und dem Fehler der induzierten Spannung $U_{ind}$ ist nachfolgend dargestellt:

$$\begin{bmatrix} \Delta\varphi_{el} \\ \Delta\omega_{el} \end{bmatrix} = \begin{bmatrix} \dfrac{\partial K_{E\alpha}(\hat{\varphi}_{el})}{\partial\varphi_{el}} \cdot \hat{\omega}_{el} & K_{E\alpha}(\hat{\varphi}_{el}) \\ \dfrac{\partial K_{E\beta}(\hat{\varphi}_{el})}{\partial\varphi_{el}} \cdot \hat{\omega}_{el} & K_{E\beta}(\hat{\varphi}_{el}) \end{bmatrix}^{-1} \cdot \begin{bmatrix} U_{ind_\alpha} - \hat{U}_{ind_\alpha} \\ U_{ind_\beta} - \hat{U}_{ind_\beta} \end{bmatrix}$$

Bei der Verwendung eines Kalman Filters, könnte identisch zur Fehlerbestimmung ein Rauschfaktor R umgerechnet werden.

$$R_\varepsilon = J^{-1} \cdot R_{Uind}$$

Mithilfe einer virtuellen Strecke 15 wird nun die geschätzte Läuferlage $\hat{\varphi}_{st}$ und die geschätzte Winkelgeschwindigkeit $\hat{\omega}_{st}$ anhand der zuvor ermittelten linearisierten Fehler der Läuferlage und/oder der Winkelgeschwindigkeit ermittelt. Am Beispiel eines Beobachters erfolgt dies wie folgt:

$$\begin{bmatrix} \dot{\hat{X}} \end{bmatrix} = [A] \cdot [\hat{X}] + [G] \cdot [\varepsilon]$$

wobei $[A] = \begin{bmatrix} 0 & 1 \\ 0 & 0 \end{bmatrix}$ entspricht.

$$s \cdot [\hat{X}] = [A] \cdot [\hat{X}] + [G] \cdot ([X] - [\hat{X}])$$

$$(s \cdot [I] - [A] + [G]) \cdot [\hat{X}] = [G] \cdot [X]$$

$$[\hat{X}] = (s \cdot [I] - [A] + [G])^{-1} \cdot [G] \cdot [X]$$

Die Übertragungsfunktion $[H] = \dfrac{[\hat{X}]}{[X]}$ der virtuellen Strecke 15 ist dann:

$$[H] = [A_0]^{-1} \cdot [G] \; mit \; [A_0] = s[I] - [A] + [G]$$

Ein Nenner N(s) der Übertragungsfunktion [H] ist dann N(s) = det [A₀]. Die Pole des Polynoms N(s) bestimmen die Dynamik der Übertragungsfunktion [H]. Die Dynamik der Übertragungsfunktion bestimmt das Einschwingverhalten der virtuellen Strecke 15 auf die betrachteten Größen. Die Matrix [G] wird so gewählt, dass sich die gewünschte Einschwingdynamik einstellt.

Anschließend werden die geschätzten Größen $[\hat{X}]$ für die Läuferlage $\hat{\varphi}_{el}$ und die Drehzahl $\hat{\omega}_{el}$ in die geschätzte induzierte Spannung Û$_{ind}$ wie oben beschrieben im Rückrechnungsblock 13 zurückgerechnet und dem Differenzglied 12 zugeführt.

Aufgrund des P-T2-Verhaltens der virtuellen Strecke 15 reagiert diese auf eine Rampenanregung mit einer bleibenden Regelabweichung. Die wird mit dem Endwertsatz im Frequenzbereich ermittelt wie folgt:

$$\lim_{s \to 0} s \cdot \frac{\alpha_{el}}{s^2}\left(1 - \frac{1}{(sT_{B1} + 1) \cdot (sT_{B2} + 1)}\right) = \alpha_{el}(T_{B1} + T_{B2})$$

Die bleibende Regelabweichung hängt somit von der geschätzten Winkelbeschleunigung (bestimmt durch die Zuführung der G-Matrix) und der eingestellten Dynamik der virtuellen Strecke 15 ab. Die durch die Beschleunigung $\alpha_{el}$ abzusehende Regelabweichung kann zu der geschätzten Winkelgeschwindigkeit $\hat{\dot{\varphi}}_{el}$ zur Korrektur hinzugerechnet werden.

## Patentansprüche

1. Verfahren zum sensorlosen Bestimmen einer Läuferlage ($\varphi_{el}$) und /oder einer Geschwindigkeitsangabe ($\hat{\omega}_{el}$) zum Betreiben einer elektronisch kommutierten elektrischen Maschine (2), mit folgenden Schritten:

   - Bestimmen einer induzierten Spannung (U$_{ind}$) in Spulen der elektrischen Maschine (2) aus einem oder mehreren Maschinenströmen und Maschinenspannungen; und
   - Schätzen der Läuferlage ($\hat{\varphi}_{el}$) und /oder der Geschwindigkeitsangabe ($\hat{\omega}_{el}$) aus einer Abweichung ($\Delta U_{ind}$) der induzierten Spannung (U$_{ind}$) von einer geschätzten induzierten Spannung (Û$_{ind}$),

   **dadurch gekennzeichnet, dass** das Bestimmen der Läuferlage ($\hat{\varphi}_{el}$) und /oder der Geschwindigkeitsangabe ($\hat{\omega}_{el}$) durchgeführt wird

   - indem die Abweichung der induzierten Spannung (U$_{ind}$) linearisiert wird, um eine Abweichung ($\Delta\varphi_{el}$) zwischen der aktuellen Läuferlage ($\varphi_{el}$) und der geschätzten Läuferlage ($\hat{\varphi}_{el}$) und / oder eine Abweichung ($\Delta\omega_{el}$) zwischen der aktuellen Geschwindigkeitsangabe ($\omega_{el}$) und der geschätzten Geschwindigkeitsangabe ($\hat{\omega}_{el}$) zu erhalten,
   - indem die Abweichungen ($\Delta\varphi_{el}, \Delta\omega_{el}$) der Läuferlage ($\varphi_{el}$) und / oder der Geschwindigkeitsangabe ($\omega_{el}$) einer virtuellen Strecke zugeführt wird, um die geschätzte Läuferlage ($\hat{\varphi}_{el}$) und die geschätzte Geschwindigkeitsangabe ($\hat{\omega}_{el}$) zu ermitteln; und
   - indem die geschätzte Läuferlage ($\hat{\varphi}_{el}$) und die geschätzte Geschwindigkeitsangabe ($\hat{\omega}_{el}$) in die geschätzte induzierte Spannung (Û$_{ind}$) zurückgerechnet werden.

2. Verfahren nach Anspruch 1, wobei die Abweichungen ($\Delta\varphi_{el}, \Delta\omega_{el}$) der Läuferlage und / oder der Geschwindigkeitsangabe verwendet werden, um die geschätzte Läuferlage ($\hat{\varphi}_{el}$) und die geschätzte Geschwindigkeitsangabe ($\hat{\omega}_{el}$) zu korrigieren.

3. Verfahren nach Anspruch 1 bis 2, wobei eine durch eine Abtastung oder Filterung der induzierten Spannung (U$_{ind}$)

bewirkte Verzerrung mit Hilfe einer geschwindigkeitsabhängigen Linearisierung korrigiert wird, um eine Abweichung zwischen der aktuellen Läuferlage ($\varphi_{el}$) und der geschätzten Läuferlage ($\hat{\varphi}_{el}$) und / oder eine Abweichung zwischen der aktuellen Geschwindigkeitsangabe($\omega_{el}$) und der geschätzten Geschwindigkeitsangabe ($\hat{\omega}_{el}$) zu erhalten, wobei die zurückgerechnete geschätzte induzierte Spannung ($\hat{U}_{ind}$) mit der gleichen Übertragungsfunktion beaufschlagt wird.

**4.** Vorrichtung zum sensorlosen Bestimmen einer Läuferlage ($\varphi_{el}$) und /oder einer Geschwindigkeitsangabe ($\hat{\omega}_{el}$) zum Betreiben einer elektronisch kommutierten elektrischen Maschine, umfassend:

- einen Berechnungsblock (11) zum Bestimmen einer induzierten Spannung ($U_{ind}$) in Spulen der elektrischen Maschine (2) aus einem oder mehreren Maschinenströmen und Maschinenspannungen; und
- einen Schätzer (16) zum Schätzen der Läuferlage ($\hat{\varphi}_{el}$) und / oder der Geschwindigkeitsangabe ($\hat{\omega}_{el}$) aus einer Abweichung ($\Delta U_{ind}$) der induzierten Spannung ($U_{ind}$) von einer geschätzten induzierten Spannung ($\hat{U}_{ind}$),

**dadurch gekennzeichnet, dass** der Schätzer (16) ausgebildet ist, um das Bestimmen der Läuferlage ($\hat{\varphi}_{el}$) und /oder der Geschwindigkeitsangabe ($\hat{\omega}_{el}$) durchzuführen,

- indem die Abweichung der induzierten Spannung ($U_{ind}$) linearisiert wird, um eine Abweichung ($\Delta\varphi_{el}$) zwischen der aktuellen Läuferlage ($\varphi_{el}$) und der geschätzten Läuferlage ($\hat{\varphi}_{el}$) und / oder eine Abweichung ($\Delta\omega_{el}$) zwischen der aktuellen Geschwindigkeitsangabe ($\omega_{el}$) und der geschätzten Geschwindigkeitsangabe ($\hat{\omega}_{el}$) zu erhalten,
- indem die Abweichungen ($\Delta\varphi_{el}, \Delta\omega_{el}$) der Läuferlage ($\varphi_{el}$) und / oder der Geschwindigkeitsangabe ($\omega_{el}$) einer virtuellen Strecke zugeführt wird, um die geschätzte Läuferlage($\hat{\varphi}_{el}$) und die geschätzte Geschwindigkeitsangabe ($\hat{\omega}_{el}$) zu ermitteln; und
- indem die geschätzte Läuferlage ($\hat{\varphi}_{el}$) und die geschätzte Geschwindigkeitsangabe ($\hat{\omega}_{el}$) in die geschätzte induzierte Spannung ($\hat{U}_{ind}$) zurückgerechnet werden.

**5.** Vorrichtung nach Anspruch 4, umfassend:

- einen Linearisierungsblock (14) zum Linearisieren der Abweichung der induzierten Spannung, um eine Abweichung zwischen der aktuellen Läuferlage und der geschätzten Läuferlage ($\hat{\varphi}_{el}$) und / oder eine Abweichung zwischen der aktuellen Geschwindigkeitsangabe und der geschätzten Geschwindigkeitsangabe ($\hat{\omega}_{el}$) zu erhalten, und
- einen Rückrechnungsblock (13) zum Rückrechnen der geschätzten Läuferlage ($\hat{\varphi}_{el}$) und / oder der geschätzten Geschwindigkeitsangabe ($\hat{\omega}_{el}$) in eine geschätzte induzierte Spannung ($\hat{U}_{ind}$).

**6.** Motorsystem (1) mit einer elektrischen Maschine (2) und einer Vorrichtung nach Anspruch 4 oder 5.

**7.** Computerprogrammprodukt, das einen Programmcode enthält, der, wenn er auf einer Datenverarbeitungseinheit ausgeführt wird, das Verfahren nach einem der Ansprüche 1 bis 3 durchführt.

**Claims**

**1.** Method for the sensorless determination of a rotor position ($\varphi_{el}$) and/or of a speed specification ($\hat{\omega}_{el}$) for operating an electronically commutated electric machine (2), having the following steps:

- determining an induced voltage ($U_{ind}$) in coils of the electric machine (2) from one or more machine currents and machine voltages, and
- estimating the rotor position ($\hat{\varphi}_{el}$) and/or the speed specification ($\hat{\omega}_{el}$) from a deviation ($\Delta U_{ind}$) of the induced voltage ($U_{ind}$) from an estimated induced voltage ($\hat{U}_{ind}$),

**characterized in that** the determination of the rotor position ($\hat{\varphi}_{el}$) and/or of the speed specification ($\hat{\omega}_{el}$) is carried out

- by linearizing the deviation of the induced voltage ($U_{ind}$) in order to obtain a deviation ($\Delta\varphi_{el}$) between the current rotor position ($\varphi_{el}$) and the estimated rotor position ($\hat{\varphi}_{el}$), and/or a deviation ($\Delta\omega_{el}$) between the current speed specification ($\omega_{el}$) and the estimated speed specification ($\hat{\omega}_{el}$),
- by feeding the deviations ($\Delta\varphi_{el}, \Delta\omega_{el}$) of the rotor position ($\varphi_{el}$) and/or of the speed specification ($\omega_{el}$) to a virtual path in order to determine the estimated rotor position ($\hat{\varphi}_{el}$) and the estimated speed specification ($\hat{\omega}_{el}$), and

- by calculating back to the estimated induced voltage ($\hat{U}_{ind}$) from the estimated rotor position ($\hat{\varphi}_{el}$) and the estimated speed specification ($\hat{\omega}_{el}$).

2. Method according to Claim 1, in which the deviations ($\Delta\varphi_{el}, \Delta\omega_{el}$) of the rotor position and/or of the speed specification are used in order to correct the estimated rotor position ($\hat{\varphi}_{el}$) and the estimated speed specification ($\hat{\omega}_{el}$).

3. Method according to Claims 1 to 2, in which a distortion effected by a sampling or filtering of the induced voltage ($U_{ind}$) is corrected with the aid of a speed-dependent linearization in order to obtain a deviation between the current rotor position ($\varphi_{el}$) and the estimated rotor position ($\hat{\varphi}_{el}$) and/or a deviation between the current speed specification ($\omega_{el}$) and the estimated speed specification ($\hat{\omega}_{el}$),
   the same transfer function being applied to the induced voltage ($\hat{U}_{ind}$) estimated by back calculation.

4. Device for the sensorless determination of a rotor position ($\varphi_{el}$) and/or a speed specification ($\hat{\omega}_{el}$) in order to operate an electronically commutated electric machine, comprising:

   - a calculation block (11) for the determination of an induced voltage ($U_{ind}$) in coils of the electric machine (2) from one or more machine currents and machine voltages, and
   - an estimator (16) for the estimation of the rotor position ($\hat{\varphi}_{el}$) and/or the speed specification ($\hat{\omega}_{el}$) from a deviation ($\Delta U_{ind}$) of the induced voltage ($U_{ind}$) from an estimated induced voltage ($\hat{U}_{ind}$),

   **characterized in that** the estimator (16) is designed to carry out the determination of the rotor position ($\hat{\varphi}_{el}$) and/or the speed specification ($\hat{\omega}_{el}$),

   - by linearizing the deviation of the induced voltage ($U_{ind}$) in order to obtain a deviation ($\Delta\varphi_{el}$) between the current rotor position ($\varphi_{el}$) and the estimated rotor position ($\hat{\varphi}_{el}$), and/or a deviation ($\Delta\omega_{el}$) between the current speed specification ($\omega_{el}$) and the estimated speed specification ($\hat{\omega}_{el}$),
   - by feeding the deviations ($\Delta\varphi_{el}, \Delta\omega_{el}$) of the rotor position ($\varphi_{el}$) and/or of the speed specification ($\omega_{el}$) to a virtual path in order to determine the estimated rotor position ($\hat{\varphi}_{el}$) and the estimated speed specification ($\hat{\omega}_{el}$), and
   - by calculating back to the estimated induced voltage ($\hat{U}_{ind}$) from the estimated rotor position ($\hat{\varphi}_{el}$) and the estimated speed specification ($\hat{\omega}_{el}$).

5. Device according to Claim 4, comprising:

   - a linearization block (14) for the linearization of the deviation of the induced voltage in order to obtain a deviation between the current rotor position and the estimated rotor position ($\hat{\varphi}_{el}$), and/or a deviation between the current speed specification and the estimated speed specification ($\hat{\omega}_{el}$), and
   - a back calculation block (13) for calculating back to an estimated induced voltage ($U_{ind}$) from the estimated rotor position ($\hat{\varphi}_{el}$) and/or the estimated speed specification ($\hat{\omega}_{el}$).

6. Motor system (1) having an electric machine (2) and a device according to Claim 4 or 5.

7. Computer program product which includes a program code which carries out the method according to one of Claims 1 to 3 when it is executed on a data processing unit.

**Revendications**

1. Procédé pour déterminer sans capteurs la position ($\varphi_{el}$) et/ou une donnée de vitesse ($\hat{\omega}_{el}$) d'un induit, en vue de conduire une machine électrique (2) à commutation électronique, le procédé présentant les étapes suivantes :

   détermination d'une position induite ($U_{ind}$) dans les enroulements de la machine électrique (2) à partir d'un ou plusieurs courants de machine et d'une ou plusieurs tensions de machine et
   estimation de la position ($\hat{\varphi}_{el}$) de l'induit et/ou d'une donnée de vitesse ($\hat{\omega}_{el}$) à partir d'un écart ($\Delta U_{ind}$) entre la tension induite ($U_{ind}$) et une tension induite estimée ($\hat{U}_{ind}$),

   **caractérisé en ce que**

   la détermination de la position ($\hat{\varphi}_{el}$) de l'induit et/ou de la donnée de vitesse ($\hat{\omega}_{el}$) est réalisée

en linéarisant l'écart de la tension induite ($U_{ind}$) pour obtenir un écart ($\Delta\varphi_{el}$) entre la position effective ($\varphi_{el}$) de l'induit et la position estimée ($\hat{\varphi}_{el}$) de l'induit et/ou de l'écart ($\Delta\omega_{el}$) entre la donnée effective de vitesse ($\omega_{el}$) et la donnée estimée de vitesse ($\hat{\omega}_{el}$),

en amenant les écarts ($\Delta\varphi_{el}$, $\Delta\omega_{el}$) de la position ($\varphi_{el}$) de l'induit et/ou de la donnée de vitesse ($\omega_{el}$) à un parcours virtuel pour déterminer la position estimée ($\hat{\varphi}_{el}$) de l'induit et la donnée estimée de vitesse ($\hat{\omega}_{el}$) et

en recalculant la position estimée ($\hat{\varphi}_{el}$) de l'induit et la donnée estimée de vitesse ($\hat{\omega}_{el}$) en la tension induite estimée ($\hat{U}_{ind}$).

2. Procédé selon la revendication 1, dans lequel les écarts ($\Delta\varphi_{el}$, $\Delta\omega_{el}$) de position d'induit et/ou de donnée de vitesse sont utilisés pour corriger la position estimée ($\hat{\varphi}_{el}$) de l'induit et la donnée estimée de vitesse ($\hat{\omega}_{el}$).

3. Procédé selon les revendications 1 et 2, dans lequel une imprécision découlant de l'échantillonnage ou du filtrage de la tension induite ($U_{ind}$) est corrigée à l'aide d'une linéarisation en fonction de la vitesse pour obtenir un écart entre la position effective ($\varphi_{el}$) de l'induit et la position estimée ($\hat{\varphi}_{el}$) de l'induit et/ou un écart entre la donnée effective de vitesse ($\hat{\omega}_{el}$) et la donnée estimée de vitesse ($\hat{\omega}_{el}$),

une même fonction de transfert étant appliquée sur la tension induite estimée ($\hat{U}_{ind}$) recalculée.

4. Dispositif pour déterminer sans capteurs la position ($\varphi_{el}$) d'un induit et/ou une donnée de vitesse ($\hat{\omega}_{el}$) en vue de la conduite d'une machine électrique à commutation électronique, le dispositif comprenant :

un bloc de calcul (11) qui détermine une tension induite ($U_{ind}$) dans les enroulements de la machine électrique (2) à partir d'un ou plusieurs courants de machine et d'une ou plusieurs tensions de machine et

un estimateur (16) qui estime la position ($\hat{\varphi}_{el}$) de l'induit et/ou la donnée de vitesse ($\hat{\omega}_{el}$) à partir d'un écart ($\Delta U_{ind}$) entre la tension induite ($U_{ind}$) et une tension induite estimée ($\hat{U}_{ind}$),

**caractérisé en ce que**

l'estimateur (16) est configuré pour réaliser l'estimation la détermination de la position ($\hat{\varphi}_{el}$) de l'induit et/ou des données de vitesse ($\hat{\omega}_{el}$)

en linéarisant l'écart de la tension induite ($U_{ind}$) pour obtenir un écart ($\Delta\varphi_{el}$) entre la position effective ($\varphi_{el}$) de l'induit et la position estimée ($\hat{\phi}_{el}$) de l'induit et/ou de l'écart ($\Delta\omega_{el}$) entre la donnée effective de vitesse ($\omega_{el}$) et la donnée estimée de vitesse ($\hat{\omega}_{el}$),

en amenant les écarts ($\Delta\varphi_{el}$, $\Delta\omega_{el}$) de la position ($\varphi_{el}$) de l'induit et/ou de la donnée de vitesse ($\omega_{el}$) à un parcours virtuel pour déterminer la position estimée ($\hat{\varphi}_{el}$) de l'induit et la donnée estimée de vitesse ($\hat{\omega}_{el}$) et

en recalculant la position estimée ($\hat{\varphi}_{el}$) de l'induit et la donnée estimée de vitesse ($\hat{\omega}_{el}$) en la tension induite estimée ($\hat{U}_{ind}$).

5. Dispositif selon la revendication 4, comprenant :

un bloc de linéarisation (14) qui linéarise l'écart de la tension induite pour obtenir un écart entre la position effective de l'induit et la position estimée ($\hat{\varphi}_{el}$) de l'induit et/ou l'écart entre la donnée effective de vitesse et la donnée estimée de vitesse ($\hat{\omega}_{el}$) et

un bloc de recalcul (13) qui recalcule la position estimée ($\hat{\varphi}_{el}$) de l'induit et/ou la donnée estimée de vitesse ($\hat{\omega}_{el}$) en la tension induite estimée ($\hat{U}_{ind}$).

6. Système (1) de moteur doté d'une machine électrique (2) et d'un dispositif selon les revendications 4 ou 5.

7. Produit de programme informatique qui contient un code de programme qui met en oeuvre le procédé selon l'une des revendications 1 à 3 lorsqu'il est exécuté sur une unité de traitement de données.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2010068581 B
- US 20040201358 A
- EP 1133050 A2